# EUROPÄISCHE PATENTSCHRIFT

(11) **EP 1 207 186 B1**
(45) Veröffentlichungstag und Bekanntmachung des Hinweises auf die Patenterteilung: **06.05.2004**
(21) Anmeldenummer: 01811071.8
(22) Anmeldetag: 06.11.2001
(51) Int. Cl.: C09B 62/513, C09B 62/09

(54) **Reaktivfarbstoffe, Verfahren zu deren Herstellung und deren Verwendung**
Reactive dyes, process for their preparation and the use thereof
Colorants réactifs, procédé pour leur préparation et leur utilisation

(30) Priorität: 15.11.2000 EP 00811078
(43) Veröffentlichungstag der Anmeldung: 22.05.2002
(73) Patentinhaber: Ciba Specialty Chemicals Holding Inc., 4057 Basel (CH)
(72) Erfinder: Tzikas, Athanassios, 4133 Pratteln (CH); Cortese, Bruno, 68350 Brunstatt (FR)

(56) Entgegenhaltungen:
- EP-A- 0 214 093
- EP-A- 0 231 836
- EP-A- 0 499 588
- EP-A- 0 652 262

## Beschreibung

Die vorliegende Erfindung betrifft neue Reaktivfarbstoffe, Verfahren zu ihrer Herstellung und ihre Verwendung zum Färben oder Bedrucken von textilen Fasermaterialien.

Faserreaktive Disazofarbstoffe mit einer 4-(β-Sulfatoethyl-, β-Chlorethyl- oder Vinylsulfonylphenyl)-amino-2-chlor-s-triazin-6-ylamino-Gruppe sind bereits aus der EP, A, 0 231 836 bekannt.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefordert, die eine ausreichende Substantivität haben und die zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen. Von den bekannten Farbstoffen werden diese Anforderungen nicht in allen Eigenschaften erfüllt.

Der vorliegenden Erfindung liegt daher die Aufgabe zugrunde, neue, verbesserte Reaktivfarbstoffe für das Färben und Bedrucken von Fasermaterialien zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen Farbstoffen die gestellte Aufgabe weitgehend gelöst wird.

Gegenstand der vorliegenden Erfindung sind daher Reaktivfarbstoffe der Formel (1) 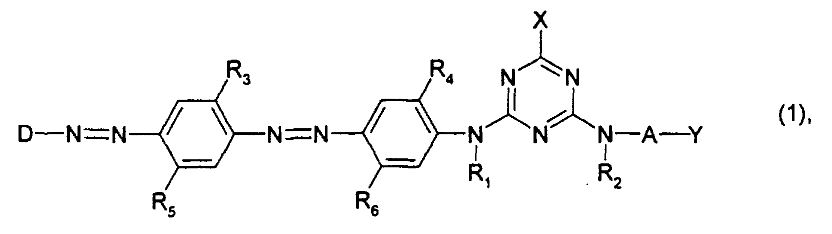 worin
R₁ und R₂ unabhängig voneinander Wasserstoff oder gegebenenfalls substituiertes C₁-C₄-Alkyl bedeuten,
R₃ und R₄ unabhängig voneinander Wasserstoff, C₁-C₄-Alkyl, C₁-C₄-Alkoxy, Halogen, Carboxy oder Sulfo sind,
R₅ und R₆ unabhängig voneinander Wasserstoff, C₁-C₄-Alkyl, C₁-C₄-Alkoxy, Halogen, Nitro, C₂-C₄-Alkanoylamino, Benzoylamino, Ureido, Carboxy oder Sulfo bedeuten,
D ein Rest der Formel 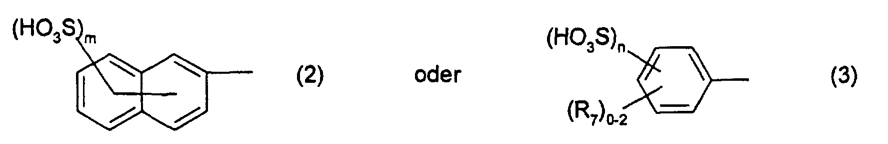 ist, worin
(R₇)₀₋₂ für 0 bis 2 gleiche oder voneinander verschiedene Substituenten ausgewählt aus der Gruppe Halogen, C₂-C₄-Alkanoylamino, C₁-C₄-Alkyl und C₁-C₄-Alkoxy steht,
X Halogen bedeutet,
A-Y für einen Rest der Formel

-(CH₂)₂-O-(CH₂)₂-SO₂-Z₁ (4a)

oder 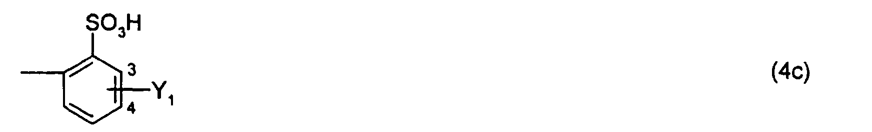 steht, worin
Y₁ α,β-Dibrompropionylamino oder α-Bromacryloylamino und
Z₁ Vinyl, β-Chlorethyl oder β-Sulfatoethyl bedeutet,
m für die Zahl 1, 2 oder 3 steht, und
n die Zahl 1 oder 2 ist.

Als C₁-C₄-Alkyl kommen für R₁, R₂, R₃, R₄, R₅, R₆ und R₇ unabhängig voneinander beispielsweise Methyl, Ethyl, n-Propyl, Isopropyl, n-Butyl, sek.-Butyl, tert.-Butyl oder iso.-Butyl, vorzugsweise Methyl oder Ethyl und insbesondere Methyl, in Betracht. Die genannten Alkylreste R₁ und R₂ können unsubstituiert oder beispielsweise durch Hydroxy, Sulfo, Sulfato, Cyano oder Carboxyl substituiert sein. Bevorzugt sind die entsprechenden unsubstituierten Alkylreste.

Als C₁-C₄-Alkoxy kommen für R₃, R₄, R₅, R₆ und R₇ unabhängig voneinander beispielsweise Methoxy, Ethoxy, n-Propoxy, Isopropoxy, n-Butoxy, sek.-Butoxy, tert.-Butoxy oder iso.-Butoxy, vorzugsweise Methoxy oder Ethoxy und insbesondere Methoxy, in Betracht.

Als Halogen kommen für R₃, R₄, R₅, R₆ und R₇ unabhängig voneinander beispielsweise Fluor, Chlor oder Brom, vorzugsweise Chlor oder Brom und insbesondere Chlor, in Betracht.

Als C₂-C₄-Alkanoylamino kommen für R₅, R₆ und R₇ unabhängig voneinander z.B. Acetylamino oder Propionylamino, insbesondere Acetylamino, in Betracht.

In den erfindungsgemässen Reaktivfarbstoffen der Formel (1) bedeutet D als Rest der Formel (2) z.B. einen Rest der Formel 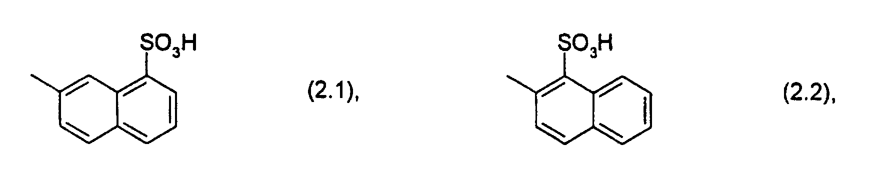 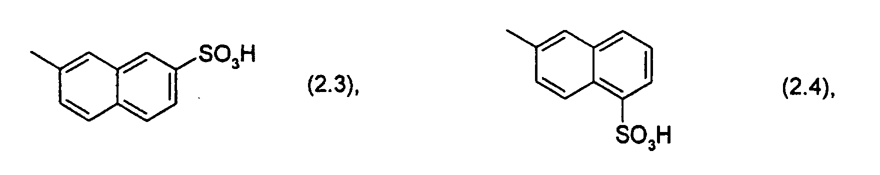 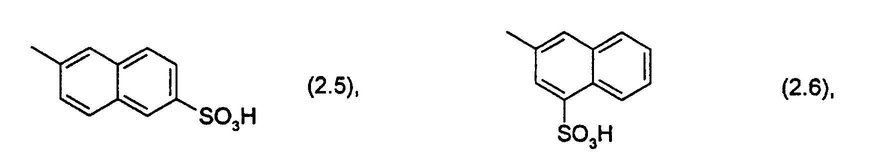 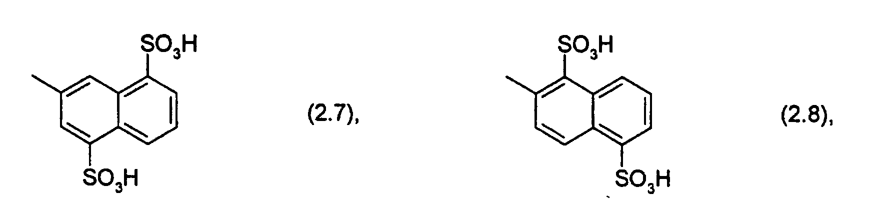 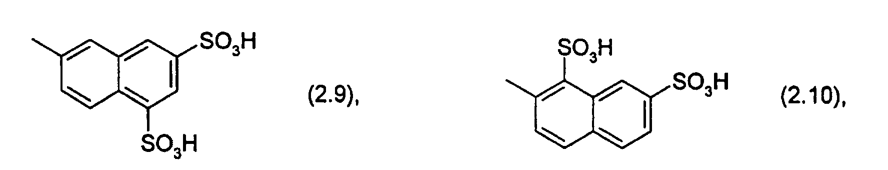 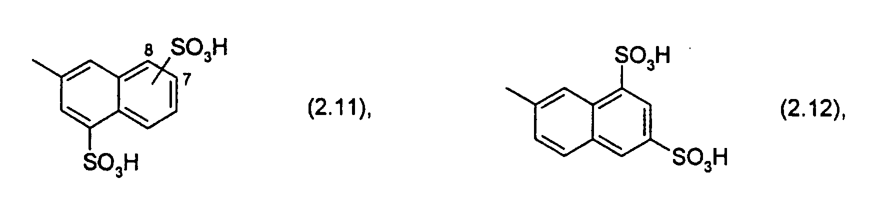 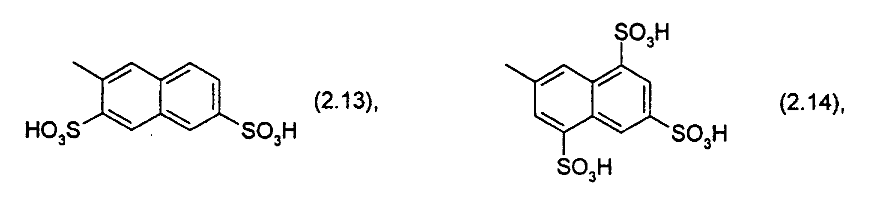 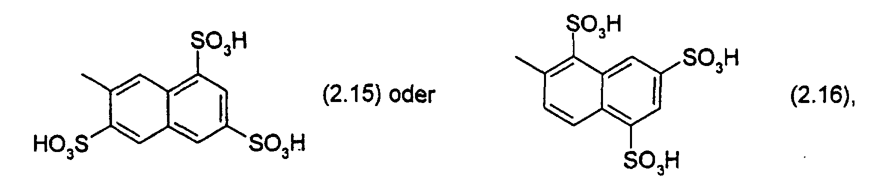 vorzugsweise der Formel (2.14), (2.15) oder (2.16) und insbesondere der Formel (2.14).

In den erfindungsgemässen Reaktivfarbstoffen der Formel (1) bedeutet D als Rest der Formel (3) z.B. einen Rest der Formel 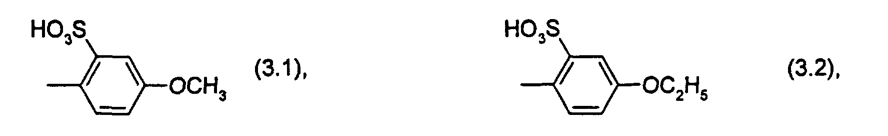 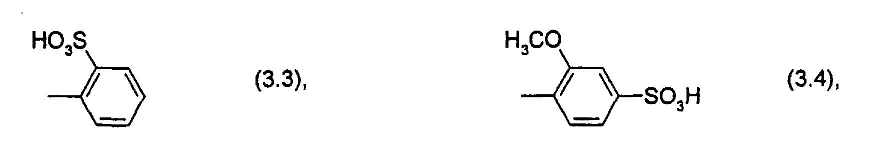 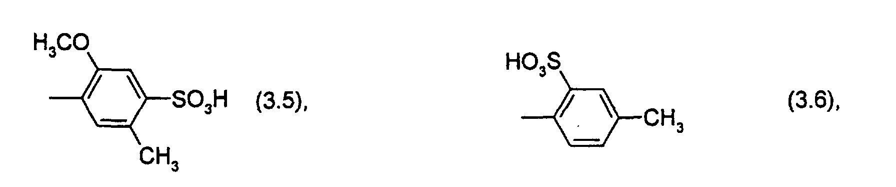 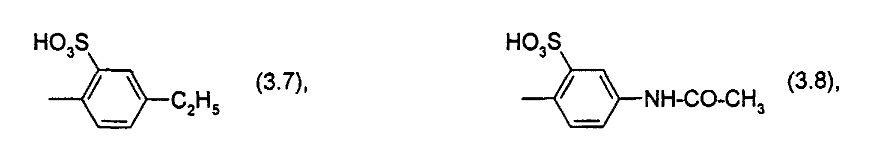 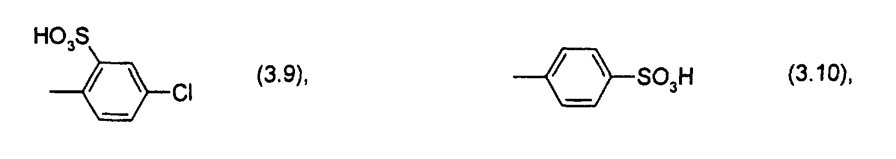 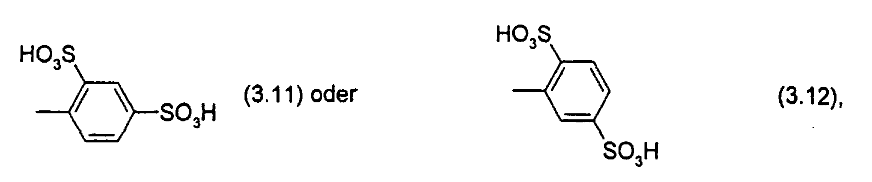 vorzugsweise der Formel (3.11) oder (3.12) und insbesondere der Formel (3.12).

Für X kommt z.B. Fluor, Chlor oder Brom in Betracht.

Bevorzugt sind R₁ und R₂ unabhängig voneinander Wasserstoff oder C₁-C₄-Alkyl, vorzugsweise Wasserstoff oder Methyl und insbesondere Wasserstoff.

Bevorzugt bedeuten R₃ und R₄ unabhängig voneinander Wasserstoff, C₁-C₄-Alkyl, C₁-C₄-Alkoxy oder Sulfo, vorzugsweise Wasserstoff, C₁-C₄-Alkyl oder C₁-C₄-Alkoxy und insbesondere Wasserstoff.

Bevorzugt sind R₅ und R₆ unabhängig voneinander Wasserstoff, C₁-C₄-Alkyl, C₁-C₄-Alkoxy, C₂-C₄-Alkanoylamino, Benzoylamino, Ureido oder Sulfo, vorzugsweise Wasserstoff, C₁-C₄-Alkyl, C₁-C₄-Alkoxy, Ureido, C₂-C₄-Alkanoylamino und insbesondere Wasserstoff.

Bevorzugt steht R₇ im Rest D der Formel (3) für 0 bis 2 gleiche oder voneinander verschiedene Substituenten ausgewählt aus der Gruppe C₁-C₄-Alkyl und C₁-C₄-Alkoxy und insbesondere für Wasserstoff.

Bevorzugt ist X Fluor oder Chlor, insbesondere Fluor.

m im Rest D der Formel (2) steht bevorzugt für die Zahl 2 oder 3 und insbesondere für die Zahl 3.

n im Rest D der Formel (3) steht bevorzugt für die Zahl 2.

Bevorzugt sind die erfindungsgemässen Reaktivfarbstoffe, worin
m die Zahl 2 oder 3 ist,
n für die Zahl 2 steht und
R₇ Wasserstoff ist.
Z₁ ist vorzugsweise Vinyl oder β-Chlorethyl.

In einer besonders bevorzugten Ausführungsform der erfindungsgemässen Reaktivfarbstoffe der Formel (1) bedeutet der Rest der Formel -A-Y den Rest der Formel (4a).

In einer bevorzugten Ausführungsform der vorliegenden Erfindung ist der Reaktivfarbstoff der Formel (1) ein Reaktivfarbstoff der Formel 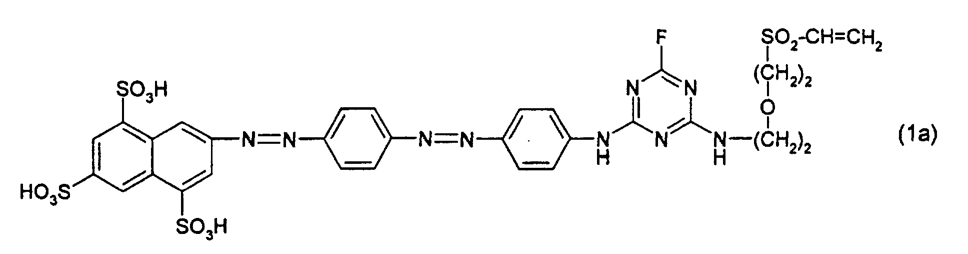 oder 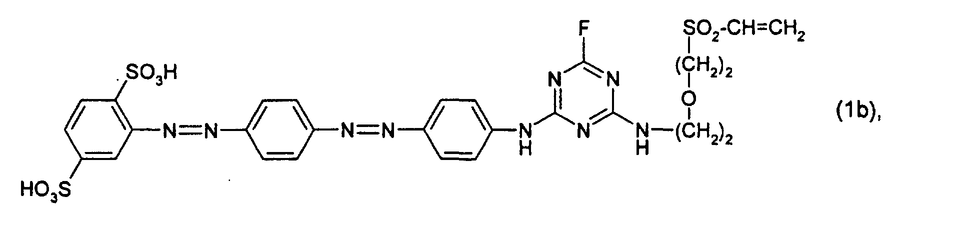 insbesondere der Formel (1a).

Einen weiteren Gegenstand der vorliegenden Erfindung betrifft ein Verfahren zur Herstellung der erfindungsgemässen Reaktivfarbstoffe, worin man eine Verbindung der Formel 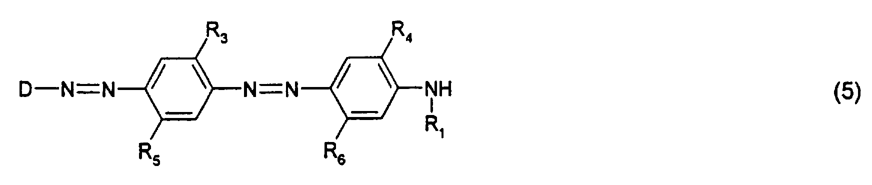 mit Cyanurhalogenid und einem Amin der Formel 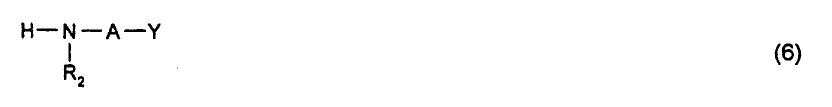 in beliebiger Reihenfolge miteinander umsetzt, wobei für R₁, R₂, R₃, R₄, R₅, R₆, A-Y und D die oben angegebenen Bedeutungen und Bevorzugungen gelten.

Da die oben angegebenen Verfahrensschritte in unterschiedlicher Reihenfolge, gegebenenfalls auch gleichzeitig, ausgeführt werden können, sind verschiedene Verfahrensvarianten möglich. Im allgemeinen führt man die Umsetzung schrittweise durch, wobei sich die Reihenfolge der einfachen Reaktionen zwischen den einzelnen Reaktionskomponenten vorteilhafterweise nach den besonderen Bedingungen richtet. So wird z.B. in etwa ein Moläquivalent eines Amins der Formel (6) mit in etwa einem Moläquivalent Cyanurhalogenid umgesetzt und das erhaltene Produkt anschliessend mit in etwa einem Moläquivalent einer Verbindung der Formeln (5) kondensiert. In einer anderen Verfahrensvariante wird z.B. in etwa ein Moläquivalent einer Verbindung der Formeln (5) mit in etwa einem Moläquivalent Cyanurhalogenid umgesetzt und die erhaltene Kondensationsprodukt anschliessend mit in etwa einem Moläquivalent eines Amins der Formel (6) kondensiert. Statt des Farbstoffs der Formel (5) kann auch dessen Vorprodukt eingesetzt und im Verlauf des weiteren Verfahrens durch Diazotierung und anschliessende Kupplungsreaktion fertiggestellt werden.

Die einzelnen Kondensationsreaktionen erfolgen z.B. gemäss an sich bekannter Verfahren, in der Regel in wässriger Lösung, bei einer Temperatur von z.B. 0 bis 50°C, insbesondere 0 bis 10°C, und einem pH-Wert von z.B. 3 bis 10, insbesondere 3 bis 7.

Als Cyanurhalogenid eignen sich z.B. Cyanurchlorid und Cyanurfluorid und insbesondere Cyanurfluorid.

Das Endprodukt kann gegebenfalls noch einer Umwandlungsreaktion unterzogen werden. Eine solche Umwandlungsreaktion ist beispielsweise die Überführung einer in Y, d.h. in Z₁ oder Y₁, enthaltenen, vinylierbaren Reaktivgruppe in ihre Vinylform durch Behandeln mit verdünnter Natronlauge, wie z.B. die Überführung der β-Sulfatoethylsulfonyl- oder β-Chlorethylsulfonylgruppe in den Vinylsulfonylrest. Solche Reaktionen sind an sich bekannt. Vorzugsweise wird eine Vinylierung durchgeführt.

Bevorzugt wird das Herstellungverfahren der erfindungsgemässen Reaktivfarbstoffe in der Weise durchgeführt, dass man in etwa ein Moläquivalent einer Verbindung der Formel (5), worin für R₁, R₃, R₄, R₅, R₆ und D die oben angegebenen Bedeutungen und Bevorzugungen gelten, mit in etwa einem Moläquivalent Cyanurchlorid oder Cyanurfluorid, vorzugsweise Cyanurfluorid, umsetzt und das erhaltene Kondensat mit in etwa einem Moläquivalent einer Verbindung der Formel (6), worin für R₂ und A die oben angegebenen Bedeutungen und Bevorzugungen gelten und Y eine vinylierbare Reaktivgruppe enthält, kondensiert und die vinylierbare Reaktivgruppe in ihre Vinylform überführt.

Die Verbindungen der Formeln (5) und (6) sind bekannt oder können in Analogie zu bekannten Verbindungen hergestellt werden.

Die erfindungsgemässen Reaktivfarbstoffe der Formel (1) liegen entweder in der Form ihrer freien Säure oder vorzugsweise als deren Salze vor. Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triethanolamins genannt.

Die erfindungsgemässen Verbindungen der Formel (1) eignen sich als Farbstoffe zum Färben und Bedrucken der verschiedensten Materialien, wie hydroxylgruppenhaltigen oder stickstoffhaltigen Fasermaterialien. Als Beispiele für stickstoffhaltige Fasermaterialien seien Seide, Leder, Wolle, Polyamidfasern und Polyurethane genannt. Die erfindungsgemässen Reaktivfarbstoffe sind insbesondere zum Färben und Bedrucken von cellulosehaltigen Fasermaterialien aller Art geeignet. Solche cellulosehaltige Fasermaterialien sind beispielsweise die natürlichen Cellulosefasern, wie Baumwolle, Leinen und Hanf, sowie Zellstoff und regenerierte Cellulose, vorzugsweise Baumwolle. Die erfindungsgemässen Reaktivfarbstoffe sind auch zum Färben oder Bedrucken von cellulosehaltigen Mischgeweben, z.B. von Gemischen aus Baumwolle und Polyamidfasern oder besonders von Baumwolle/Polyestermischfasern geeignet.

Die erfindungsgemässen Reaktivfarbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung oder durch mehrstündiges Lagern bei Raumtemperatur fixiert werden. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die erfindungsgemässen Reaktivfarbstoffe zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemässen Farbstoffe eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Reaktivfarbstoffen hergestellten Färbungen und Drucke besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Chlorechtheit, Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

### Beispiel 1

a) In 100 Teilen eines Eis/Wasser Gemisches werden unter Zugabe eines Netzmittels und 0,16 Teilen Dinatriumhydrogenphosphat bei einer Temperatur von 0°C 18,5 Teile Cyanurfluorid kräftig verrührt. Dazu tropft man eine neutrale Lösung von 80,10 Teilen eines Farbstoffs der Formel 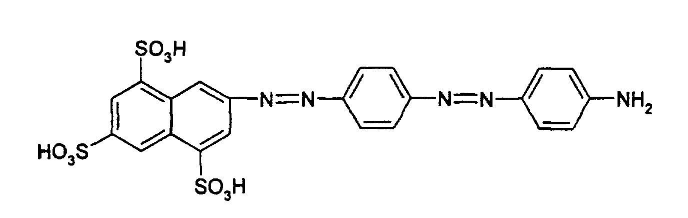 in 580 Teilen Wasser. Die Temperatur des Reaktionsgemisches wird bei 0 bis 5°C und der pH-Wert durch Zugabe einer Natriumhydroxydlösung bei 7 gehalten bis die Kondensation beendet ist.
b) Die gemäss a) erhaltene Reaktionsmischung wird bei 4°C und pH 7 zunächst mit 22,63 Teilen einer Verbindung der Formel

   H₂N-(CH₂)₂-O-(CH₂)₂-SO₂-(CH₂)₂-Cl

   versetzt und dann bei einer Temperatur von 4 bis 6°C durch Zugabe einer 20%igen Sodalösung auf einen pH-Wert von 7,5 gestellt. Die Kondensation wird weitere 4 Stunden bei 24 bis 34°C und pH 7,5 durchgeführt. Anschliessend stellt man den pH-Wert mit verdünnter Salzsäure auf 6 und rührt noch über Nacht bei Raumtemperatur.
c) Die gemäss b) erhaltene Reaktionsmischung wird durch Zugabe einer Natriumhydroxydlösung auf pH 11 gestellt und 35 Minuten bei diesem pH-Wert und Raumtemperatur gerührt. Anschliessend wird der pH-Wert mit verdünnter Salzsäure auf 6 gestellt, die erhaltene Reaktionsmischung klärfiltriert und im Vakuum bei leicht erhöhter Temperatur eingedampft. Man erhält 158,2 Teile einer Mischung, welche eine Verbindung enthält, die als freie Säure der Formel (101) 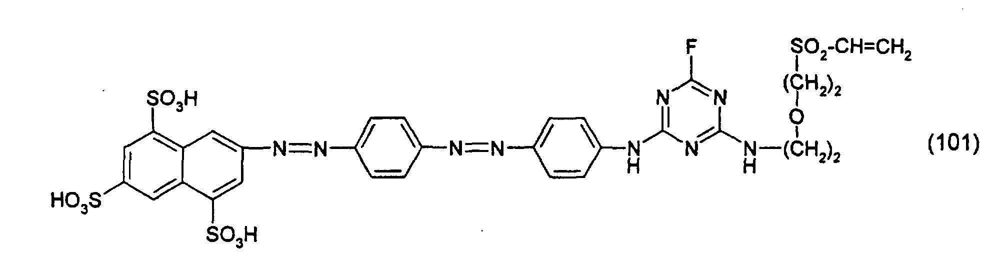 entspricht und Baumwolle in gelbem Farbton mit guten Allgemeinechtheiten färbt.

Beispiele 2 bis 10: In analoger Weise zu den Angaben in Beispiel 1 können die nachfolgend angegebenen Farbstoffe erhalten werden, welche Baumwolle in gelben Farbtönen mit guten Allgemeinechtheiten färben.

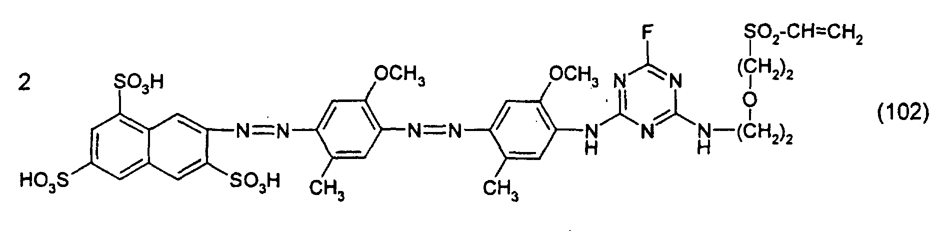

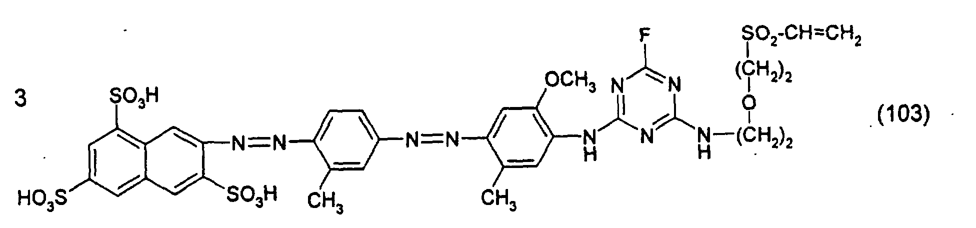

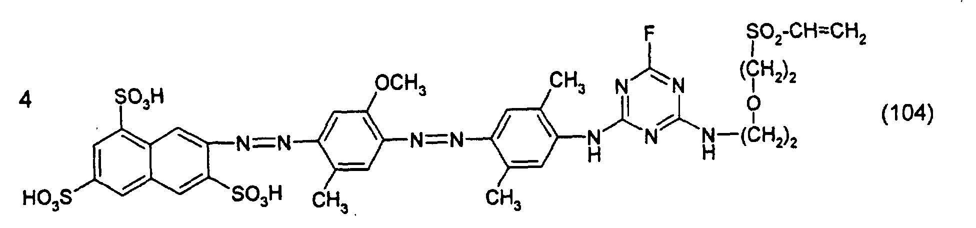

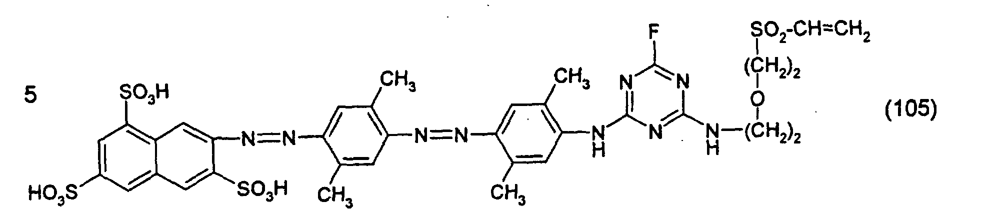

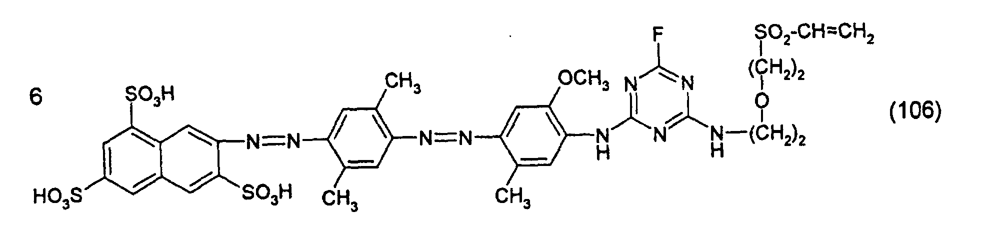

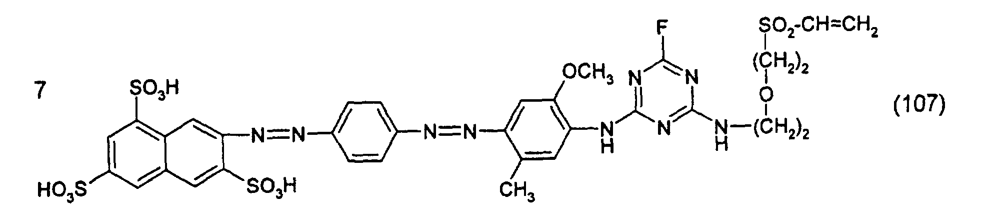

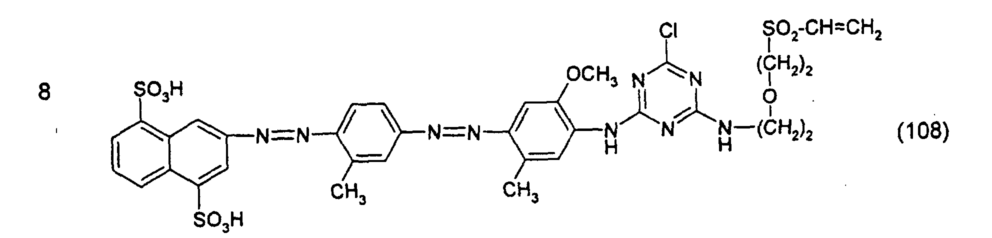

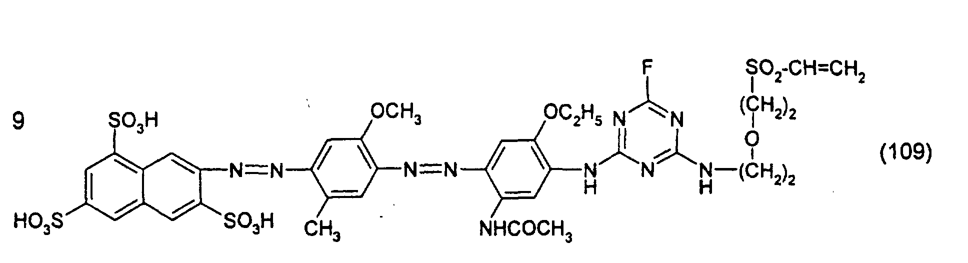

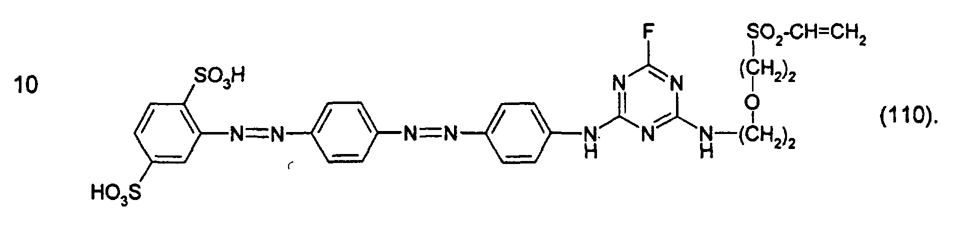

### Färbevorschrift I

In 1500 Teile eines Färbebads, welches 45 g/l Natriumchlorid und 2 Teile des gemäss Beispiel 1 erhaltenen Reaktivfarbstoffs enthält, geht man bei 80°C mit 100 Teilen Baumwollgewebe ein. Nach 45 Minuten bei 80°C werden 20 g/l kalziniertes Soda zugegeben. Man färbt weitere 45 Minuten bei dieser Temperatur. Danach wird die gefärbte Ware gespült, während einer Viertelstunde mit einem nichtionogenen Waschmittel kochend geseift, nochmals gespült und getrocknet.

Alternativ zur angegebenen Vorschrift kann anstatt bei 80°C auch bei 60°C gefärbt werden.

### Färbevorschrift II

Es werden 0,1 Teile des Farbstoffs gemäss Beispiel 1 in 200 Teilen Wasser gelöst und 0,5 Teile Natriumsulfat, 0,1 Teile eines Egalisierhilfsmittels (basierend auf dem Kondensationsprodukt aus einem höheren aliphatischen Amin und Ethylenoxid) sowie 0,5 Teile Natriumacetat zugegeben. Dann wird der pH mit Essigsäure (80%) auf einen Wert von 5,5 gestellt. Das Färbebad wird 10 Minuten auf 50°C erwärmt und es werden dann 10 Teile eines Wollgewebes zugegeben. Man erwärmt innerhalb von ca. 50 Minuten auf eine Temperatur von 100°C und färbt 60 Minuten bei dieser Temperatur. Danach lässt man auf 90°C abkühlen und entnimmt das Färbegut. Das Wollgewebe wird mit warmem und kaltem Wasser gewaschen, anschliessend geschleudert und getrocknet.

### Druckvorschrift

3 Teile des gemäss Beispiel 1 erhaltenen Farbstoffs werden unter schnellem Rühren in 100 Teile einer Stammverdickung, enthaltend 50 Teile 5 %-ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Reaktivfarbstoffe der Formel (1) 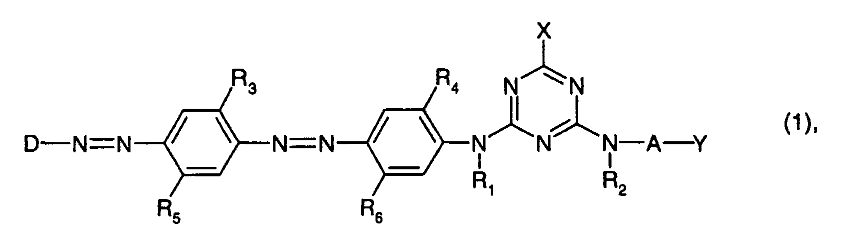 worin
R₁ und R₂ unabhängig voneinander Wasserstoff oder gegebenenfalls substituiertes C₁-C₄-Alkyl bedeuten,
R₃ und R₄ unabhängig voneinander Wasserstoff, C₁-C₄-Alkyl, C₁-C₄-Alkoxy, Halogen, Carboxy oder Sulfo sind,
R₅ und R₆ unabhängig voneinander Wasserstoff, C₁-C₄-Alkyl, C₁-C₄-Alkoxy, Halogen, Nitro, C₂-C₄-Alkanoylamino, Benzoylamino, Ureido, Carboxy oder Sulfo bedeuten,
D ein Rest der Formel 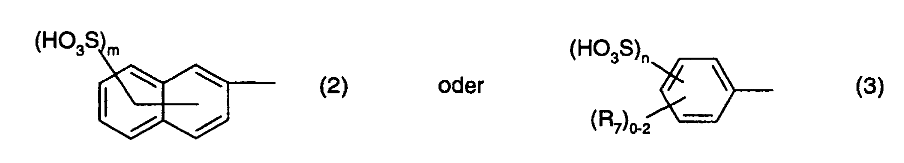 ist, worin
(R₇)₀₋₂ für 0 bis 2 gleiche oder voneinander verschiedene Substituenten ausgewählt aus der Gruppe Halogen, C₂-C₄-Alkanoylamino, C₁-C₄-Alkyl und C₁-C₄-Alkoxy steht,
X Halogen bedeutet,
A-Y für einen Rest der Formel
-(CH₂)₂-O-(CH₂)₂-SO₂-Z₁ (4a)
oder 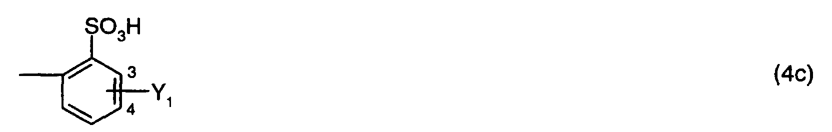 steht, worin
Y₁ α,β-Dibrompropionylamino oder α-Bromacryloylamino und
Z₁ Vinyl, β-Chlorethyl oder β-Sulfatoethyl bedeutet,
m für die Zahl 1, 2 oder 3 steht, und
n die Zahl 1 oder 2 ist.

2. Reaktivfarbstoffe gemäss Anspruch 1, **dadurch gekennzeichnet, dass**
R₁ und R₂ Wasserstoff bedeuten.

3. Reaktivfarbstoffe gemäss Anspruch 1 oder 2, **dadurch gekennzeichnet, dass**
R₃ und R₄ Wasserstoff sind.

4. Reaktivfarbstoffe gemäss einem der Ansprüche 1 bis 3, **dadurch gekennzeichnet, dass** R₅ und R₆ Wasserstoff bedeuten.

5. Reaktivfarbstoffe gemäss einem der Ansprüche 1 bis 4, **dadurch gekennzeichnet, dass** X Fluor oder Chlor, insbesondere Fluor, ist.

6. Reaktivfarbstoffe gemäss einem der Ansprüche 1 bis 5, **dadurch gekennzeichnet, dass**
m die Zahl 2 oder 3 ist,
n für die Zahl 2 steht und
R₇ Wasserstoff ist.

7. Reaktivfarbstoffe gemäss Anspruch 1, **dadurch gekennzeichnet, dass** sie der Formel 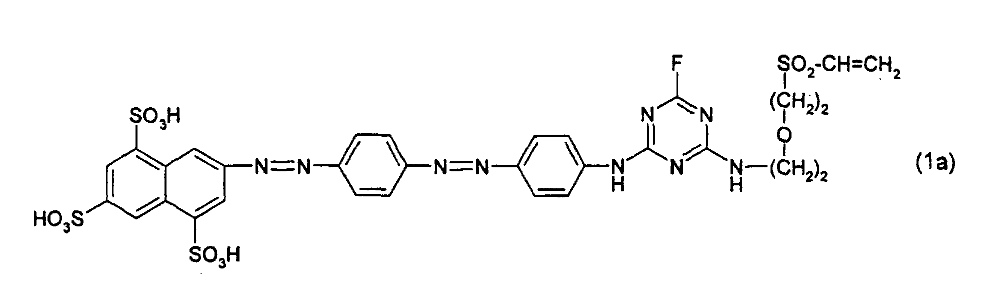 oder 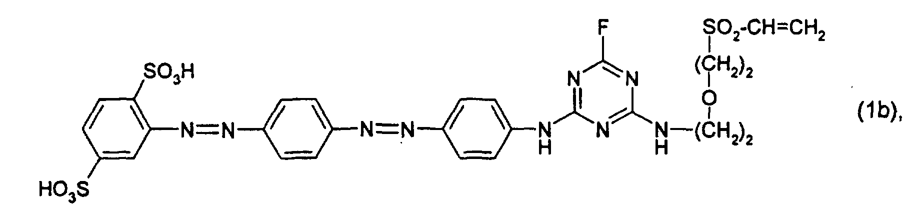 entsprechen.

8. Verfahren zur Herstellung von Reaktivfarbstoffen gemäss Anspruch 1, **dadurch gekennzeichnet, dass** man eine Verbindung der Formel 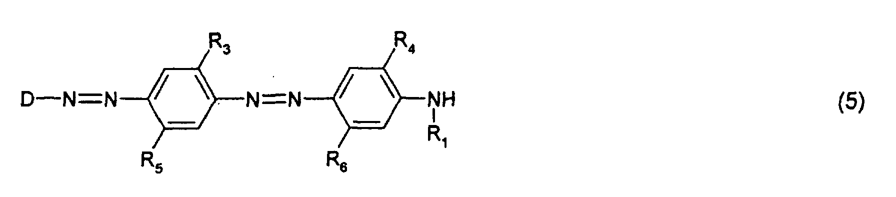 mit Cyanurhalogenid und einem Amin der Formel 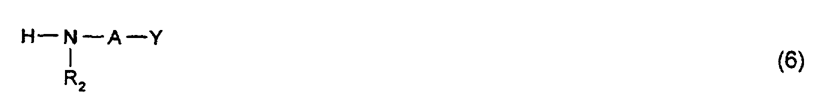 in beliebiger Reihenfolge miteinander umsetzt, wobei für R₁, R₂, R₃, R₄, R₅, R₆, A-Y und D die in Anspruch 1 angegebenen Bedeutungen gelten.

9. Verwendung von Reaktivfarbstoffen gemäss einem der Ansprüche 1 bis 7 oder die gemäss Anspruch 8 hergestellten Reaktivfarbstoffe zum Färben oder Bedrucken von hydroxylgruppenhaltigen oder stickstoffhaltigen Fasermaterialien.

10. Verwendung gemäss Anspruch 9, **dadurch gekennzeichnet, dass** man cellulosehaltige Fasermaterialien, insbesondere baumwollhaltige Fasermaterialien, färbt oder bedruckt.

## Claims

1. A reactive dye of formula (1) 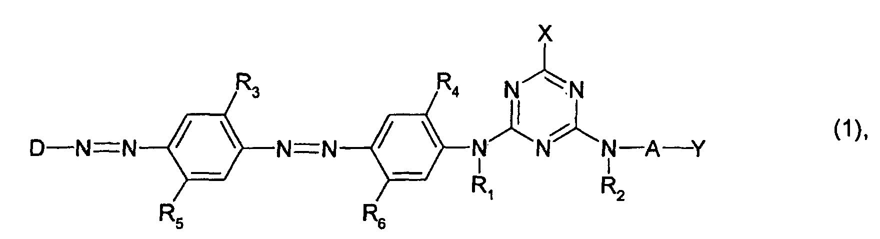 wherein
R₁ and R₂ are each independently of the other hydrogen or unsubstituted or substituted C₁-C₄alkyl,
R₃ and R₄ are each independently of the other hydrogen, C₁-C₄alkyl, C₁-C₄alkoxy, halogen, carboxy or sulfo,
R₅ and R₆ are each independently of the other hydrogen, C₁-C₄alkyl, C₁-C₄alkoxy, halogen, nitro, C₂-C₄alkanoylamino, benzoylamino, ureido, carboxy or sulfo,
D is a radical of formula 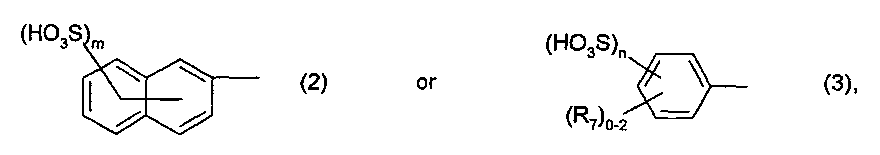 wherein
(R₇)₀₋₂ denotes from 0 to 2 identical or different substituents selected from the group halogen, C₂-C₄alkanoylamino, C₁-C₄alkyl and C₁-C₄alkoxy,
X is halogen,
A-Y is a radical of formula
-(CH₂)₂-O-(CH₂)₂-SO₂-Z₁ (4a)
or 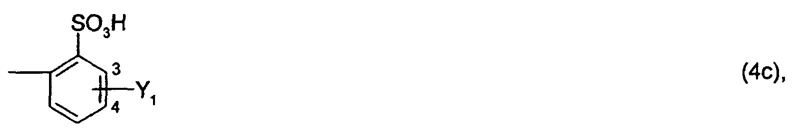 wherein
Y₁ is α,β-dibromopropionylamino or α-bromoacryloylamino and
Z₁ is vinyl, β-chloroethyl or β-sulfatoethyl,
m is the number 1, 2 or 3, and
n is the number 1 or 2.

2. A reactive dye according to claim 1, wherein
R₁ and R₂ are hydrogen.

3. A reactive dye according to either claim 1 or claim 2, wherein
R₃ and R₄ are hydrogen.

4. A reactive dye according to any one of claims 1 to 3, wherein
R₅ and R₆ are hydrogen.

5. A reactive dye according to any one of claims 1 to 4, wherein
X is fluorine or chlorine, especially fluorine.

6. A reactive dye according to any one of claims 1 to 5, wherein
m is the number 2 or 3,
n is the number 2 and
R₇ is hydrogen.

7. A reactive dye according to claim 1 that corresponds to formula 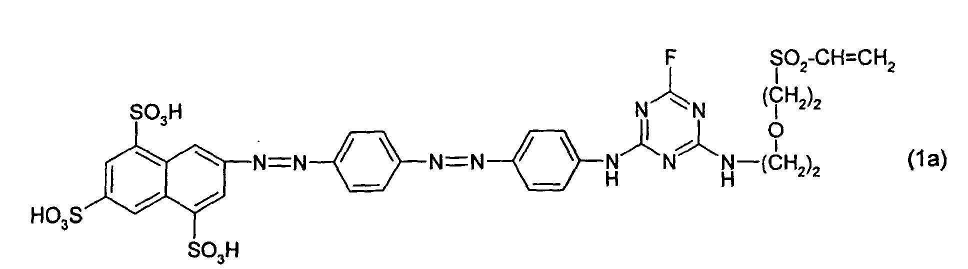 or

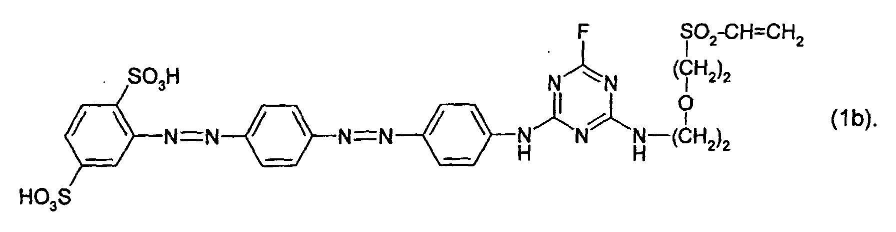

8. A process for the preparation of a reactive dye according to claim 1, which process comprises reacting a compound of formula 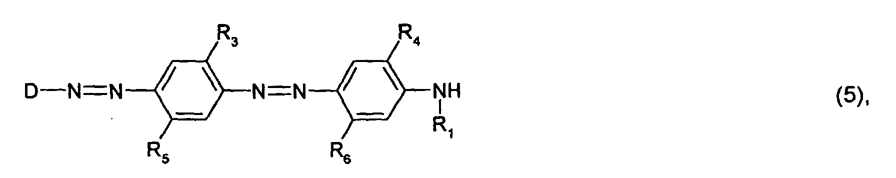 cyanuric halide and an amine of formula 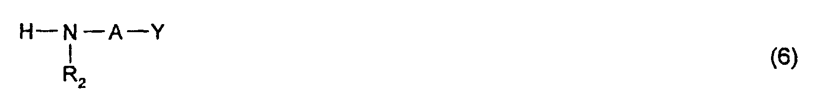 with one another in any order,
R₁, R₂, R₃, R₄, R₅, R₆, A-Y and D being as defined in claim 1.

9. Use of a reactive dye according to any one of claims 1 to 7 or of a reactive dye prepared in accordance with claim 8 for the dyeing or printing of hydroxyl-group-containing or nitrogen-containing fibre materials.

10. Use according to claim 9, wherein cellulosic fibre materials, especially cotton-containing fibre materials, are dyed or printed.

## Revendications

1. Colorants réactifs de formule (1) 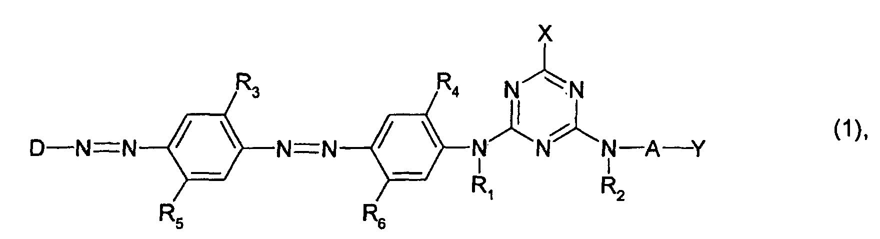 dans laquelle
R₁ et R₂ représentent chacun indépendamment de l'autre
un atome d'hydrogène ou un groupe alkyle en C₁ à C₄ éventuellement substitué,
R₃ et R₄ représentent chacun indépendamment de l'autre un atome d'hydrogène, un groupe alkyle en C₁ à C₄, alcoxy en C₁ à C₄, halogéno, carboxy ou sulfo,
R₅ et R₆ représentent chacun indépendamment de l'autre un atome d'hydrogène ou un groupe alkyle en C₁ à C₄, alcoxy en C₁ à C₄, halogéno, nitro, alcanoylamino en C₂ à C₄, benzoylamino, uréido, carboxy ou sulfo,
D est un reste de formule 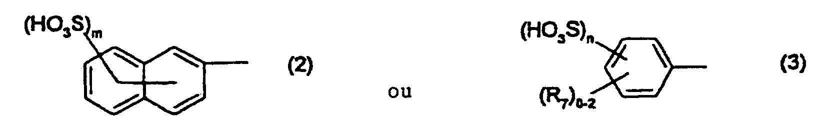 dans laquelle
(R₇)₀₋₂ représente 0 à 2 substituants identiques l'un à l'autre ou différents l'un de l'autre, choisis dans le groupe comprenant les substituants halogéno, alcanoylamino en C₂ à C₄, alkyle en C₁ à C₄ et alcoxy en C₁ à C₄,
X est un halogène,
A-Y représente un reste de formule
- (CH₂)₂-O-(CH₂)₂-SO₂-Z₁ (4a)
ou 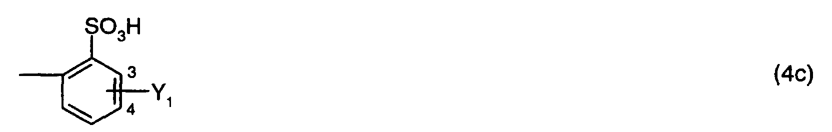 où
Y₁ est un groupe α,β-dibromopropionylamino ou α-bromoacryloylamino, et
Z₁ est le groupe vinyle, β-chloroéthyle ou β-sulfatoéthyle,
m est le nombre 1, 2 ou 3, et
n est le nombre 1 ou 2.

2. Colorants réactifs selon la revendication 1, **caractérisés en ce que** R₁ et R₂ sont des atomes d'hydrogène.

3. Colorants réactifs selon la revendication 1 ou 2, **caractérisés en ce que** R₃ et R₄ sont des atomes d'hydrogène.

4. Colorants réactifs selon l'une des revendications 1 à 3, **caractérisés en ce que** R₅ et R₆ sont des atomes d'hydrogène.

5. Colorants réactifs selon l'une des revendications 1 à 4, **caractérisés en ce que** X est le fluorure ou le chlore, en particulier le fluorure.

6. Colorants réactifs selon l'une des revendications 1 à 5, **caractérisés en ce que**
m représente le nombre 2 ou 3,
n représente le nombre 2, et
R₇ est un atome d'hydrogène.

7. Colorants réactifs selon la revendication 1,
**caractérisés en ce qu'**ils correspondent à la formule 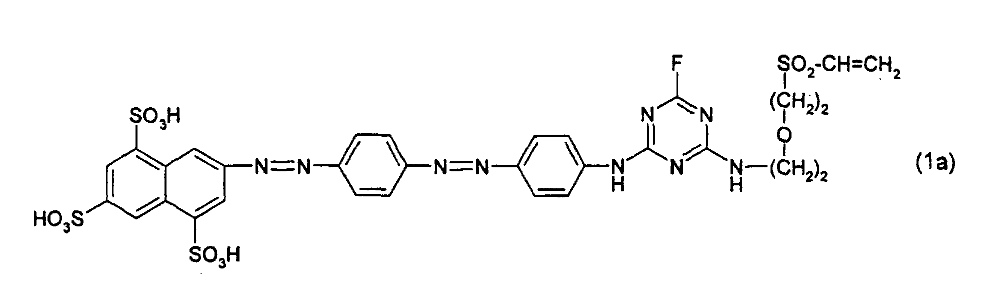 ou

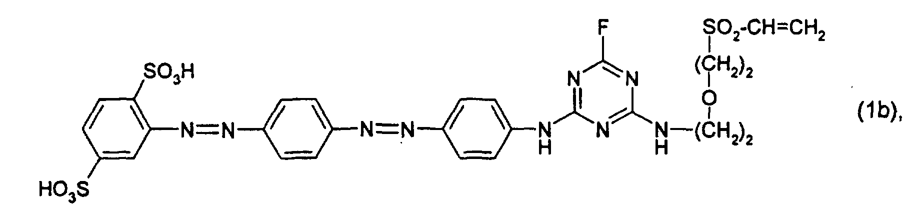

8. Procédé de préparation de colorants réactifs selon la revendication 1, **caractérisé en ce qu'**on fait réagir dans un ordre quelconque les uns avec les autres un composé de formule 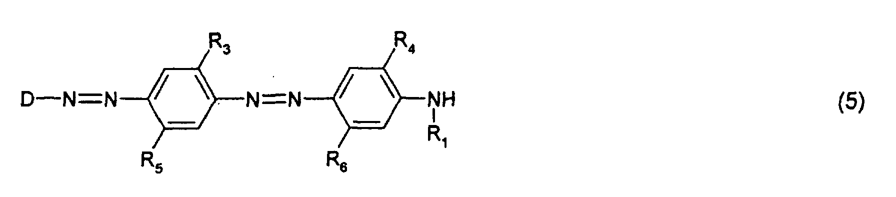 avec un halogénure de cyanuryle et une amine de formule 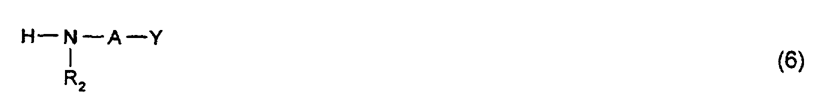 où R₁, R₂, R₃, R₄, R₅, R₆, A-Y et D ont les significations données dans la revendication 1.

9. Utilisation de colorants réactifs selon l'une des revendications 1 à 7, ou des colorants réactifs préparés selon la revendication 8 pour teindre ou imprimer des matériaux fibreux hydroxylés ou azotés.

10. Utilisation selon la revendication 9, **caractérisée en ce qu'**on teint ou on imprime des matériaux fibreux cellulosiques, en particulier des matériaux fibreux contenant du coton.
